(19) **Europäisches Patentamt**

**European Patent Office**

**Office européen des brevets**

(11) **EP 1 507 347 B1**

(12) **FASCICULE DE BREVET EUROPEEN**

(45) Date de publication et mention
de la délivrance du brevet:
**09.08.2006 Bulletin 2006/32**

(51) Int Cl.:
***H04B 17/00*** *(2006.01)*

(21) Numéro de dépôt: **04292037.1**

(22) Date de dépôt: **11.08.2004**

(54) **Dispositif de détermination des variations du DAS (Débit d'Absorption Spécifique) d'un mobile en communication**

Einrichtung zum Bestimmen von SAR (Specific Absorption Rate) Variationen in einem mobilen Kommunikationsendgerät

Apparatus for determining SAR (Specific Absorption Rate) variations in a mobile communication terminal

(84) Etats contractants désignés:
**AT BE BG CH CY CZ DE DK EE ES FI FR GB GR HU IE IT LI LU MC NL PL PT RO SE SI SK TR**

(30) Priorité: **12.08.2003 FR 0309859**

(43) Date de publication de la demande:
**16.02.2005 Bulletin 2005/07**

(73) Titulaire: **Bouygues Telecom**
**92100 Boulogne Billancourt (FR)**

(72) Inventeurs:
• **Veysset, Rémy**
**78220 Viroflay (FR)**
• **Picard, Dominique**
**78830 Bonnelles (FR)**
• **Chauvin, Sébastien**
**78150 Rocquencourt (FR)**

(74) Mandataire: **Texier, Christian et al**
**Cabinet Régimbeau**
**20, rue de Chazelles**
**75847 Paris cedex 17 (FR)**

(56) Documents cités:
EP-A- 1 298 809 WO-A-95/03549
FR-A- 2 809 274 US-A- 5 524 275

**Description**

Le domaine d'application de l'invention est celui de la téléphonie mobile comprise autant en communication de parole qu'en communication de données. L'invention concerne plus particulièrement la mesure du niveau d'exposition aux ondes électromagnétiques des usagers de terminaux de téléphonie mobile.

Les technologies de communication sans fil se développent à un rythme particulièrement soutenu et sont à la source d'un environnement électromagnétique de plus en plus complexe. Le public se préoccupe de l'impact sanitaire de l'utilisation des terminaux de téléphonie mobile (téléphones portables par exemple). Aucun effet nuisible n'a à ce jour été formellement identifié par les spécialistes, tout du moins tant que les seuils limites d'exposition fixés relativement à l'exposition du public aux champs électromagnétiques émis par les installations radioélectriques fixes et par les terminaux mobiles sont respectés.

En ce qui concerne plus spécifiquement les terminaux de téléphonie mobile (téléphones portables par exemple), les normes quantifient le taux d'absorption par les tissus biologiques de l'énergie électromagnétique provenant de radiofréquences. Ce taux est appelé DAS (Débit d'Absorption Spécifique) ou SAR (Specific Absorption Rate) selon la terminologie anglo-saxonne. Un DAS maximum moyenné sur une masse donnée de tissu biologique, dénommé <DAS>, significatif du niveau d'exposition maximal toléré, est ainsi défini. Le <DAS> limite est par exemple de 2 W/kg moyenné sur 10 grammes selon la norme européenne.

En Europe par exemple, la norme du CENELEC EN 50361 : 2001 « Norme de base relative à la mesure du Débit d'Absorption Spécifique relatif à l'exposition des personnes aux champs électromagnétiques émis par les téléphones mobiles (300 MHz - 3 GHz) » définit la procédure de mesure du DAS devant être adoptée. Ce standard européen impose d'évaluer le DAS moyen maximal sur 10g de matière à l'intérieur d'un fantôme de tête humaine rempli d'un liquide dont les caractéristiques sont celles des tissus biologiques. Ce DAS "normatif' correspond à une puissance d'émission maximale du radiotéléphone.

La mesure normative pour le contrôle du niveau de puissance rayonnée par un terminal de téléphonie mobile dans un modèle de tête humaine ne fournit que le DAS maximal théoriquement reçu par l'utilisateur et ne permet de contrôler que le respect des limites d'exposition.

On notera en particulier que, dans le cadre de la mesure normative, le terminal doit émettre à proximité du modèle, à sa puissance maximale d'émission.

En outre, la norme de détermination du DAS ne permet pas d'avoir accès au niveau de puissance réellement absorbée par la tête de l'utilisateur en situation normale d'utilisation d'un terminal de téléphonie mobile.

La mesure normative ne permet donc pas de connaître précisément quelles sont les variations en temps réel du niveau de DAS au cours d'une communication de voix ou de données.

Le DAS en situation réelle de communication dépend notamment du terminal de téléphonie mobile, de la tête de l'usager, de la position du terminal, de la fréquence d'émission, de la puissance d'émission, etc.

En particulier, la puissance d'émission du terminal de téléphonie mobile, par exemple un téléphone portable suivant la norme du système mondial de communications mobiles GSM (Global System for Mobile communications selon la terminologie anglo-saxonne), peut varier lors d'une communication dans un rapport de 1 à 1000 en fonction de la qualité de la liaison entre le mobile et le relais le plus proche.

En outre, en ce qui concerne les technologies GSM 900MHz et GSM 1800MHz (également dénommée DCS, Digital Communication System selon la terminologie anglo-saxonne), l'émission n'a pas lieu continûment mais uniquement lors d'impulsions de $576\mu s$ de durée, à raison d'une impulsion toutes les 4,6 ms (soit une fréquence de répétition de 217Hz). Le rapport cyclique (ou densité d'impulsion) est ainsi de 1/8.

De plus, toutes les impulsions d'émission ne sont pas obligatoirement présentes, surtout lorsqu'il n'y a pas de données à transmettre. La densité d'impulsion est alors inférieure à 1/8.

Le DAS instantané en conditions réelles d'utilisation est proportionnel à la puissance émise par le terminal et qui est reçue par l'usager. Les variations de cette puissance, du fait notamment des deux phénomènes présentés ci-dessus, vont entraîner des variations du DAS dans des proportions particulièrement importantes.

Le DAS constaté en situation réelle de communication peut donc fortement différer du DAS normatif.

Il existe donc un besoin pour que le DAS en situation réelle de communication soit précisément évalué.

Une telle évaluation requiert un dispositif capable en particulier d'indiquer la puissance Pe réellement émise par le terminal de téléphonie mobile en cours d'appel.

Afin d'optimiser l'ensemble des communications en cours sur une cellule et d'obtenir le meilleur compromis de qualité de transmission, l'infrastructure du réseau de téléphonie mobile télécommande en permanence à un terminal de téléphonie mobile (téléphone portable par exemple), par l'intermédiaire d'un canal de signalisation, le niveau de puissance auquel celui-ci doit émettre. Cette commande de puissance est reçue périodiquement par le terminal de téléphonie mobile et celui-ci connaît et mémorise dans une case mémoire le niveau de puissance auquel il doit émettre au cours du temps.

Il est connu de l'état de la technique, et notamment de la demande de brevet FR 2 809 274, d'exploiter cette information de commande du niveau de puissance d'émission pour évaluer la dose de rayonnements émis par un téléphone portable qui est absorbée par l'utilisateur de ce téléphone en cours d'appel.

La puissance émise dans le temps par le téléphone portable est pour cela calculée à partir d'une intégration des valeurs instantanées de ces informations de commandes en puissance. Le DAS en cours d'appel est ensuite déduit par simple homothétie du DAS à puissance maximale, ledit DAS à puissance maximale correspondant au DAS de la mesure normative.

Cependant, cette exploitation de l'information de commande du niveau de puissance d'émission d'un téléphone portable ne remplit que partiellement le besoin identifié précédemment.

En effet, comme cette information de commande provient du réseau, il existe une incertitude quant à la puissance effectivement émise par le téléphone portable.

En outre, l'environnement, et plus particulièrement la position de la tête et de l'utilisateur vis-à-vis de son téléphone portable, peuvent en particulier venir influer sur l'émission et l'absorption de puissance par la tête de l'utilisateur. Or une telle influence n'est aucunement prise en compte.

De telle sorte, la valeur du DAS en cours d'appel obtenue est imprécise et ne permet pas d'avoir accès au niveau de puissance réellement absorbée par l'utilisateur lors de l'utilisation du téléphone portable.

Le document WO 95/03549 expose une solution similaire à celle exposée ci-dessus en relation avec le document FR 2 809 274, par exploitation de l'information de commande de puissance fournie par le réseau.

On notera que le document FR 2 809 274 propose également de déterminer la valeur de puissance courante émise par un terminal de téléphonie mobile en mesurant le courant consommé par un amplificateur de sortie de l'émetteur-récepteur. Comme il est fait état dans ce document, cette solution a le désavantage de nécessiter une réalisation matérielle supplémentaire du terminal mobile.

Un but de l'invention est de combler totalement le besoin précité d'une connaissance précise, fiable et sans recours aux données dont dispose le réseau sur lequel le terminal fonctionne, des variations temporelles du rayonnement susceptible d'être absorbé par l'usager d'un terminal de téléphonie mobile en cours d'utilisation.

A cet effet, l'invention propose, selon un premier aspect, un dispositif selon la revendication 1.

De telle sorte, le rayonnement d'un terminal de téléphonie mobile en cours d'appel, téléphone portable notamment, susceptible d'être absorbé par l'usager d'un tel terminal de téléphonie mobile, ainsi que le DAS associé, sont déterminés de manière à la fois instantanée et conforme aux conditions réelles d'utilisation.

Des aspects préférés, mais non limitatifs du dispositif selon le premier aspect de l'invention sont définis dans les revendications 2-10.

Bien entendu, l'invention n'est pas limitée au dispositif décrit précédemment mais s'étend à tout terminal de téléphonie mobile intégrant ce dispositif.

Selon un deuxième aspect, l'invention propose également un procédé selon la revendication 12.

D'autres caractéristiques, buts et avantages de l'invention apparaîtront à la lecture de la description détaillée qui va suivre, et au regard des dessins annexés, donnés à titre d'exemples non limitatifs et sur lesquels :

- la figure 1 est une représentation schématique illustrant un mode de réalisation du dispositif selon le premier aspect de l'invention ;
- la figure 2 représente une partie du traitement des données en provenance de la (des) sonde(s) ;
- Les figures 3a et 3b sont des diagrammes représentant de manière simplifiée les variations de la puissance Pe(t) émise par un téléphone portable lors d'un appel dans le cas respectivement du système UMTS et d'un système utilisant la modulation à Accès Multiple par Répartition dans le Temps (AMRT ou TDMA selon l'expression anglo-saxonne Time Division Multiple Access), par exemple le système GSM.
- les figures 4a, 4b, 5a et 5b illustrent des éléments d'information destinés à être visualisés par l'usager.

Le dispositif selon le premier aspect de l'invention peut être adapté à tout type de terminal de téléphonie mobile. On peut à titre illustratif indiquer l'adaptabilité du dispositif aux configurations suivantes de terminaux :

- téléphone portable de type repliable (« flip-flop ») ou non (« mono-corps »), radiotéléphone organiseur personnel ;
- disposant d'une antenne externe ou intégrée au corps du terminal;
- avec ou sans partie mobile (« clapet ») recouvrant le clavier du terminal;
- avec ou sans kit piéton.

Le dispositif selon le premier aspect de l'invention est adapté aux différentes technologies de téléphonie mobile, et notamment à l'évolution de ces technologies vers la 3ème génération. Ledit dispositif est en particulier compatible avec les différents systèmes de téléphonie suivants :

- le système mondial de communications mobiles GSM (Global System for Mobile communications selon la terminologie anglo-saxonne) ;

- le service général de radiocommunication en mode paquet GPRS (General Packet Radio Service selon la terminologie anglo-saxonne) ;
- le système universel de télécommunications mobiles UMTS (Universal Mobile Telecommunication System selon la terminologie anglo-saxonne);

Ledit dispositif est également apte à fonctionner dans des bandes de fréquences différentes, par exemple, en ce qui concerne le système GSM, dans les bandes des fréquences situées autour de 800MHZ, 900MHz, 1800 MHz ou encore de 1900MHz.

Le dispositif selon l'invention n'est cependant pas limité aux technologies actuelles de téléphonie mobile ; il est effectivement envisagé que son utilisation puisse s'étendre, moyennant de légères adaptations, aux futurs systèmes de téléphonie mobile.

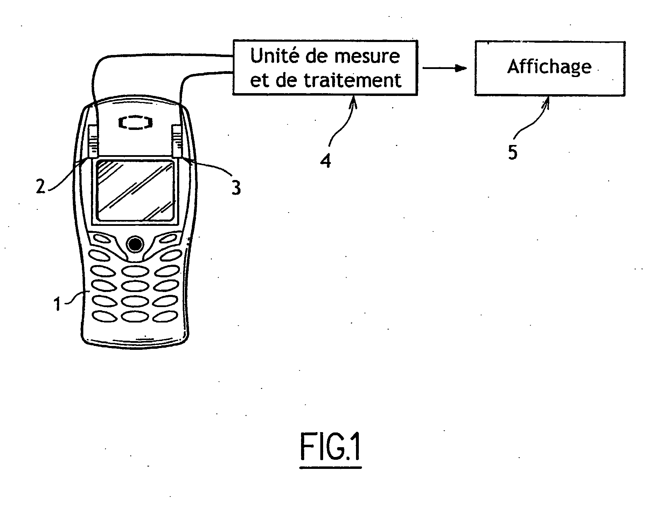

Le terminal de téléphonie mobile, dont les variations, en cours de communication, du rayonnement susceptible d'être absorbé par l'utilisateur sont mesurées par le dispositif selon l'invention, est par exemple, comme cela est représenté sur la figure 1, un téléphone portable 1.

Au moins une sonde est intégrée sur le terminal de téléphonie mobile de manière à ce que ladite sonde soit couplée à l'antenne dudit terminal de téléphonie mobile.

De manière préférentielle, une pluralité de sondes est utilisée. Les zones de détection des variations de la puissance émise par le terminal de téléphonie mobile sont ainsi diversifiées.

Il est alors possible de ne retenir pour la mesure dont il sera fait état ci-après, parmi les signaux en sortie des sondes, que les signaux les plus adaptés, par exemple le signal de niveau le plus élevé.

De telle sorte, le dispositif selon l'invention est adapté, en particulier, aux différents types de terminaux.

Dans le cadre de la figure 1, deux sondes 2, 3 sont intégrées sur le téléphone portable 1.

Lesdites sondes 2, 3 sont de petite dimension, typiquement de l'ordre du centimètre.

De telle sorte, lesdites sondes 2, 3 « prélèvent » peu du signal rayonné ou reçu par le téléphone portable 1. Elles sont donc faiblement perturbantes vis-à-vis du fonctionnement du terminal. En particulier, lesdites sondes 2,3 ne modifient pas le couplage de l'antenne du téléphone 1 portable au réseau et donc le niveau de puissance d'émission dudit téléphone 1 commandé par ledit réseau.

Le coefficient de couplage desdites sondes 2, 3 et de l'antenne du téléphone portable est, à titre d'exemple, compris entre environ -40 dB et -30dB. La sensibilité des sondes est d'environ 1mW et le dispositif selon l'invention permet de détecter une variation de la puissance d'émission d'un terminal d'un facteur 1 à 1000, par exemple de 1 mW à 1W,

Lesdites sondes 2, 3 sont disposées à proximité de l'antenne du téléphone portable 1 et de telle sorte, sont couplées avec l'antenne du téléphone portable 1 sans être perturbées par l'environnement extérieur.

La disposition des sondes 2, 3 sur le téléphone portable permet en outre de tenir compte, en temps réel, de l'influence de la tête de l'utilisateur et de la position du téléphone portable sur le rayonnement effectif dudit téléphone portable 1 en communication sur le réseau.

Le couplage entre l'antenne du téléphone portable 1 et les sondes 2, 3 est constant dans le temps.

La puissance disponible en sortie des sondes est ainsi proportionnelle à la puissance d'émission du téléphone portable.

Il est par conséquent possible de détecter les variations de la puissance d'émission du téléphone portable 1 en observant la puissance en sortie des sondes 2, 3.

Les sondes 2, 3 sont reliées à une unité 4 de mesure et de traitement adaptée notamment pour :

- acquérir les signaux hautes fréquences en sortie des sondes et les transformer en signaux exploitables, par exemple, par un système de type microcalculateur;
- mesurer, en temps réel, la puissance en sortie des sondes 2, 3 couplées avec l'antenne du téléphone portable 1;
- de traiter cette information de puissance pour en déduire un facteur de réduction permettant d'établir une correspondance entre puissance réellement émise au cours d'un appel et puissance maximale d'émission, et entre DAS en conditions réelles et DAS normatif.

L'unité 4 de mesure et de traitement permet en outre d'identifier la bande de fréquences de fonctionnement du téléphone portable 1. Il est de la sorte possible de connaître quel système de téléphonie (par exemple GSM, DCS ou UMTS) est utilisé par le téléphone portable.

L'unité 4 de mesure et de traitement peut en outre être reliée à un module d'affichage 5 adapté pour permettre la visualisation, en temps réel, lors d'un appel ainsi qu'en fin d'appel, sur un dispositif de visualisation, d'informations relatives au fonctionnement du terminal de téléphonie mobile. Bien entendu, de telles informations comprennent celles déterminées par le dispositif selon l'invention au cours d'un appel.

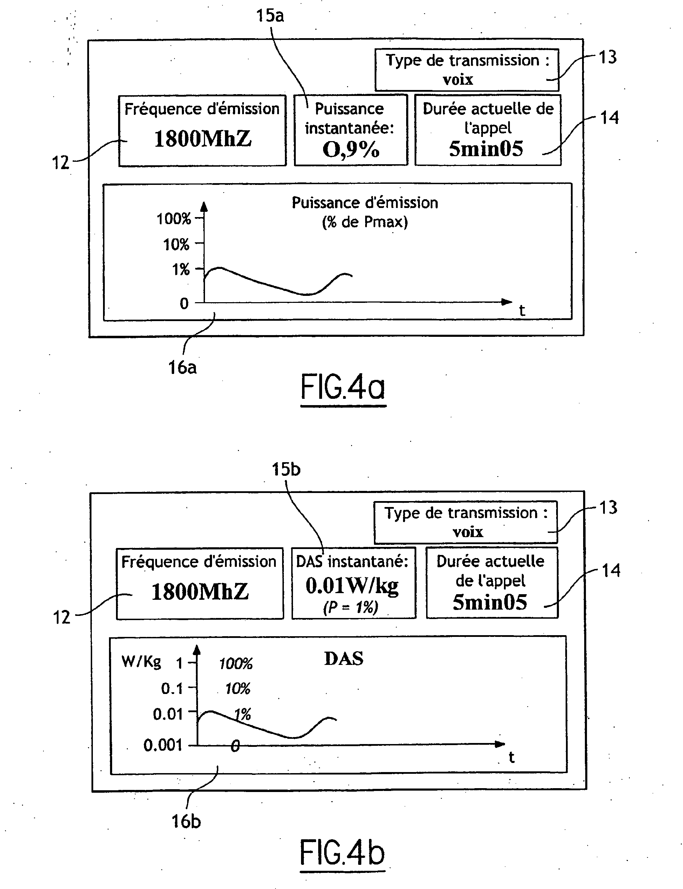

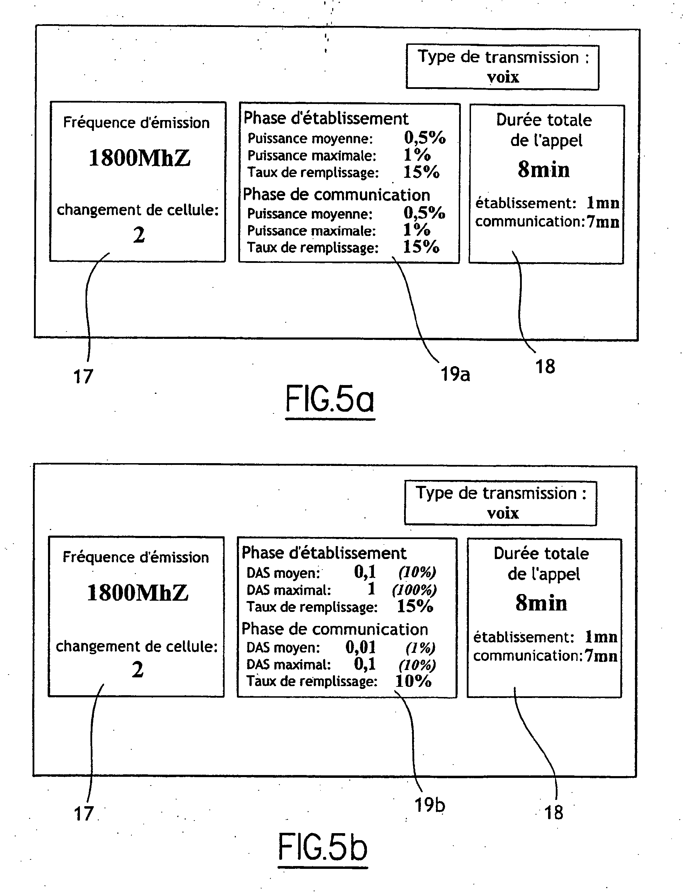

Cet aspect visualisation sera plus particulièrement examiné en détail par la suite, notamment au regard des figures 4a, 4b, 5a et 5b.

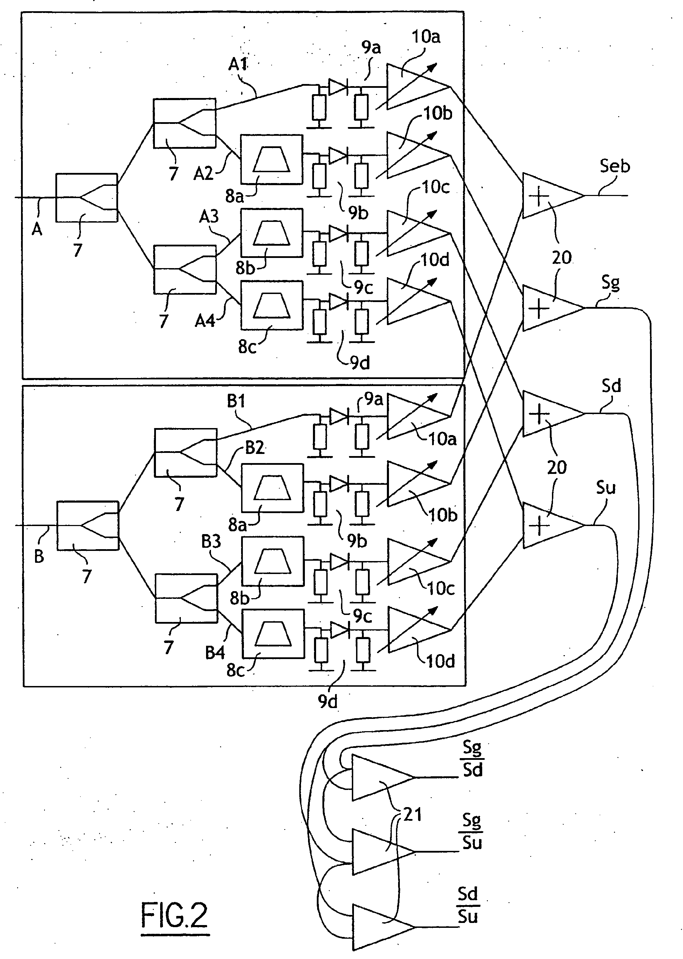

La figure 2 illustre un mode de réalisation de l'unité 4 de mesure et de traitement. La figure 2 représente plus spécifiquement la partie de ladite unité 4 adaptée, en particulier, pour :

- recueillir les données en provenance des sondes 2, 3 intégrées au téléphone 1 et couplées à l'antenne dudit téléphone 1,
- traiter ces données pour récupérer l'enveloppe des signaux en sortie desdites sondes 2, 3.

Deux voies A, B sont disposées en parallèle, chacune d'entre elles étant adaptée pour traiter le signal en sortie de l'une des sondes 2, 3.

La voie A est ainsi adaptée à la sonde 2 et la voie B, à la sonde 3.

Chacune desdites voies A, B est divisée, à l'aide de diviseurs de puissance 7, en 4 sous-voies , à savoir respectivement, une sous-voie large bande A1, B1 et 3 sous voies à bande étroite A2, B2 ; A3, B3 ; A4, B4.

Les sous-voies A2, B2 sont par exemple adaptées à la technologie GSM, les voies A3, B3, à la technologie DCS et les voies A4, B4 à la technologie UMTS.

Chacune desdites sous-voies A2, B2 ; A3, B3 ; A4, B4 comporte pour cela en entrée un filtre passe-bande 8a, 8b, 8c adapté pour ne conserver que les signaux dans une bande de fréquences autour d'une fréquence de référence (par exemple 900MHz pour les filtres 8a sur les sous-voies A2, B2 ou 1800MHz pour les filtres 8b sur les sous-voies A3, B3).

Chacune desdites sous-voies A1, B1 comporte un détecteur amplifié 9a apte à fournir l'enveloppe du signal en sortie respectivement de la sonde 2, 3, en série avec un amplificateur 10a.

Chacune desdites sous-voies A2, B2 ; A3, B3 ; A4, B4 comporte, en aval du filtre passe-bande 8a, 8b, 8c, un détecteur amplifié 9b, 9c, 9d apte à fournir l'enveloppe du signal en sortie respectivement de la sonde 2, 3, en série avec un amplificateur 10b, 10c, 10d.

Les sorties des sous-voies identiques A1, B1 ; A2, B2 ; A3, B3 ; A4, B4 de chacune des voies A, B sont sommées par des sommateurs 20 pour donner respectivement un signal de mesure large bande Slb, un signal GSM Sg, un signal DCS Sd et un signal UMTS Su.

Des comparateurs 21 permettent de connaître la bande de fréquences utilisée par le téléphone portable 1, les signaux Sg, Sd et Su étant pour cela comparés entre eux deux à deux.

Comme cela vient d'être présenté, les signaux hautes fréquences en sortie des sondes sont redressés et filtrés de façon à les transformer en signaux exploitables, par exemple, par un système de type microcalculateur.

Un tel système a finalement accès à la bande de fréquences de travail du terminal ainsi qu'à l'enveloppe des signaux issus des sondes, cette enveloppe permettant de détecter le niveau de l'émission du téléphone portable ainsi que les impulsions d'émission.

On signale ici que, par la suite, un appel sera compris comme étant constitué d'une phase d'établissement d'appel suivie d'une phase de communication.

On rappelle que la communication réalisée peut être une communication de parole et/ou une communication de données, ces deux modes de communication pouvant en outre être menés simultanément.

De manière avantageuse, le dispositif objet de l'invention se met en route automatiquement dès le début d'un appel (lorsque le terminal de téléphonie mobile bascule en phase d'établissement d'appel, suite à une numérotation par exemple), et s'arrête automatiquement à la fin de l'appel. Ledit dispositif ne nécessite donc pas l'intervention de l'usager.

Lorsque le téléphone n'est pas en appel, il est « en écoute sur le réseau » et présente une densité d'impulsions faible. En revanche, lorsque le téléphone est en appel, il présente une densité d'impulsions nettement plus élevée, cette densité redevenant faible dès la fin de l'appel.

Selon un mode de réalisation particulier de l'invention, le dispositif selon l'invention détecte que le téléphone passe d'une phase d'écoute sur le réseau à une phase d'appel (lors de l'établissement d'un appel) dès lors que la densité d'impulsions dépasse un seuil donné, et que le téléphone passe d'une phase d'appel à une phase d'écoute (lors d'une fin d'appel) dès lors que la densité d'impulsions retombe sous ledit seuil donné.

De manière avantageuse encore, le dispositif objet de l'invention n'est pas source de gêne quant à l'utilisation du terminal de téléphonie mobile par l'usager et permet une utilisation normale dudit terminal que ce soit en émission ou en réception. L'usager peut ainsi notamment accéder à toutes les fonctionnalités dudit terminal (écran, clavier, écouteur, micro, etc.).

Comme cela a déjà été présenté précédemment, la puissance émise par un terminal de téléphonie mobile fluctue au cours d'un appel.

Lors de l'établissement de l'appel, le téléphone portable émet à sa puissance maximale afin de contacter le réseau et d'établir la communication sur une station de base dudit réseau.

Une fois le téléphone portable effectivement rattaché à une station de base du réseau, la puissance émise par le téléphone portable diminue puis se stabilise. De telle sorte, l'ensemble des communications en cours sur la cellule est optimisé et ladite puissance émise est adaptée « au mieux » pour assurer la transmission des informations avec un minimum de puissance, en fonction des besoins, notamment en terme de débit de transmission et de qualité de service, de l'ensemble des téléphones portables rattachés sur la cellule.

En cours de communication, la puissance émise est amenée à varier afin de s'adapter aux modifications des besoins du téléphone portable ainsi qu'à celles dans l'environnement (variation de la charge de la cellule, établissement d'une communication sur une nouvelle cellule, modification de la qualité de réception par le mobile).

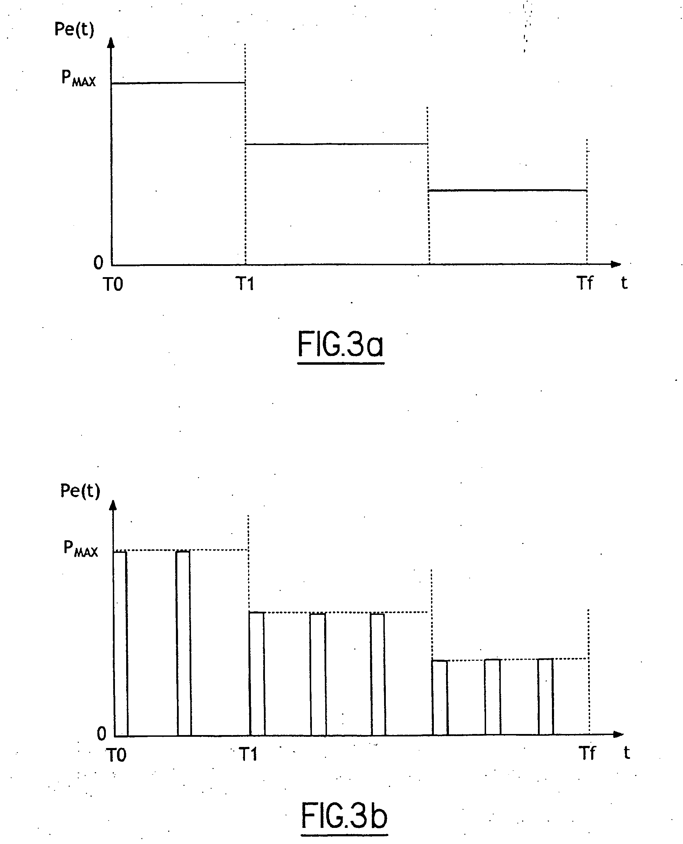

La figure 3a représente les variations de la puissance Pe(t) émise par un téléphone portable lors d'un appel, entre l'établissement de la communication (entre les instants T0 d'initiation d'appel et T1 de début de communication) et la fin de l'appel (instant Tf) dans le cas du système UMTS.

La figure 3b représente les variations de la puissance Pe(t) dans le cas de la modulation AMRT, notamment utilisée dans le système GSM.

Trois niveaux de puissance sont représentés sur les figures 3a et 3b. Le premier niveau de puissance à $P_{MAX}$ illustre l'établissement de l'appel, et les deux autres niveaux rappellent les modifications auxquelles ladite puissance émise Pe peut être sujette en cours de communication.

Dès lors que la densité d'impulsions devient supérieure au seuil mentionné précédemment, le téléphone bascule en phase d'établissement d'appel et émet donc à sa puissance maximale d'émission.

Cette phase permet alors d'auto-calibrer le dispositif objet de l'invention. En effet, la valeur maximale $Ps_{max}$ de la puissance en sortie des sondes 2, 3 mesurée par l'unité 4 de mesure et de traitement pendant cette phase d'établissement d'appel est en effet considérée comme correspondant à la puissance $P_{MAX}$ d'émission maximale du téléphone portable (de 2W par exemple), ladite puissance d'émission maximale $P_{MAX}$ contribuant au DAS normatif.

Ledit DAS normatif peut être la valeur fournie par le constructeur du terminal, pour le type de terminal de téléphonie mobile utilisé par l'usager.

De manière alternative, ledit DAS normatif du terminal de téléphonie mobile utilisé par l'usager peut être mesuré en environnement de laboratoire selon la norme de mesure préconisée.

Et de la même manière, la puissance maximale $P_{MAX}$ d'émission du téléphone portable peut être une donnée fournie par le constructeur ou encore une donnée acquise lors d'expérimentations en environnement de laboratoire.

Comme cela a déjà été présenté précédemment, le dispositif objet de l'invention est apte à déterminer des informations relatives au niveau d'exposition de l'usager au rayonnement de son terminal de téléphonie mobile.

La valeur maximale de la puissance en sortie de sonde $Ps_{max}$ mesurée lors de l'établissement de l'appel et les valeurs de puissance en sortie de sonde mesurées au cours de l'appel sont utilisées pour calculer un facteur r de réduction permettant d'établir, tout au long d'un appel, une correspondance entre :

- d'une part, la puissance réellement émise par le téléphone portable au cours d'un appel et la puissance $P_{MAX}$ d'émission maximale, et
- d'autre part, le DAS réel au cours d'un appel et le DAS normatif.

De par le couplage sonde(s)/antenne, le dispositif selon le premier aspect de l'invention permet ainsi, par l'intermédiaire dudit facteur r de réduction, de caractériser le niveau de réduction de la puissance émise par le terminal de téléphonie mobile en fonctionnement par rapport à la puissance maximale d'émission et, de manière similaire, le niveau de réduction du niveau réel de DAS par rapport au DAS normatif (DAS$_{normatif}$) dudit terminal.

En d'autres termes, le dispositif selon l'invention permet ainsi de savoir quelle est la puissance réellement émise par un terminal de téléphonie mobile (resp. le DAS en situation réelle) relativement à la puissance maximale (resp. au DAS normatif).

Il est ainsi montré la réduction de ces quantités ($P_{MAX}$, DAS$_{normatif}$) lors de conditions réelles de fonctionnement (vis-à-vis de leurs valeurs maximales ou normatives).

Au cours de l'appel, l'unité 4 de mesure et de traitement peut également déterminer, en temps réel, la puissance Pe(t) (cf. figure 3) émise par le terminal de téléphonie mobile et, de manière complémentaire, la valeur de DAS instantané DAS(t) à l'aide d'un facteur r de réduction :

$$Pe(t) = P_{MAX} \times r(t), \text{ et } DAS(t) = DAS_{normatif} \times r(t)$$

où le facteur de réduction r est exprimé par $r = \dfrac{P_i(t)}{Ps_{max}} \times d$

Avec:

- Pi(t), la puissance crête en sortie de sonde mesurée à l'instant t ;
- $Ps_{max}$, la puissance crête maximale en sortie de sonde mesurée lors de la phase d'établissement de l'appel ; et
- d, la densité des impulsions au cours desquelles s'opère l'émission.

Pour la technologie GSM, d est théoriquement égal à 1/8, un seul intervalle de temps (ou « time slot » selon la terminologie anglo-saxonne) étant utilisé sur les 8 possibles.

d est cependant généralement inférieur à 1/8, toutes les impulsions n'étant pas toujours présentes, en particulier lorsqu'il n'y a pas de données à transmettre. d s'exprime effectivement selon :

$$\frac{1}{8} * \frac{nombre\_d'impulsions\_présentes\_par\_\sec onde}{217 * \frac{25}{26}}.$$

Le facteur 25/26 appliquée à la fréquence de répétition d'impulsions de 217 Hz est du au fait, que selon la norme GSM, une impulsion sur 26 est absente.

d pourrait également être supérieur à 1/8, et même atteindre 1 si tous les intervalles de temps étaient utilisés, en particulier pour des transmissions simultanées de parole et de données.

Les variations de la densité d des impulsions influençant directement le rayonnement émis par le terminal, il est nécessaire que le dispositif selon l'invention les prenne en compte. L'analyse de l'enveloppe du signal en sortie de sonde permet de détecter les impulsions au cours desquelles s'opère l'émission et d'en déduire ladite densité d.

Pour la technologie UMTS, on considère que d=1 puisqu'il n'y a pas de "pics" à proprement parler, mais seulement des sauts de puissance durant l'appel si il y a un contrôle de puissance.

En outre, comme on l'a vu précédemment, la surveillance de cette densité d d'impulsions permet de déterminer, par exemple par dépassement d'un seuil, si le téléphone est en phase d'écoute sur le réseau ou en phase d'appel.

La puissance instantanée d'émission Pe(t) du téléphone portable est par exemple calculée en moyennant les valeurs Pi(t) de la puissance en sortie de sonde sur une fenêtre glissante puis en effectuant la correspondance mentionnée précédemment à l'aide du facteur de réduction r.

De manière préférentielle, l'unité 4 de mesure et de traitement est également apte à rapporter, en temps réel, au cours de l'appel, la puissance d'émission à la puissance maximale, ainsi que le DAS réel au DAS normatif de manière à proposer des valeurs de puissance et de DAS exprimées en pourcentage des valeurs maximales.

En fin d'appel, l'unité 4 de mesure et de traitement peut également déterminer notamment :

- la puissance moyenne et maximale émise par le terminal de téléphonie mobile durant la phase d'établissement de l'appel et durant la phase de communication (avantageusement rapportée à la puissance maximale crête dudit terminal et exprimée en pourcentages) ;
- le DAS moyen et maximal durant la phase d'établissement de l'appel et durant la phase de communication (avantageusement rapportée au DAS normatif et exprimée en pourcentages) ;
- pour la technologie GSM, le taux de remplissage moyen durant la phase d'établissement de l'appel et durant la phase de communication ;

Les données suivantes sont également susceptibles d'être recueillies ou déterminées par l'unité 4 de mesure et de traitement :

- la date, l'horaire de début et de fin de l'appel, la durée de l'appel et celle de la communication ;
- le type de transmission réalisée (voix et/ou données) ;
- les caractéristiques du signal (bande de fréquences d'émission, changement éventuel de cellule pendant l'appel). On notera qu'un fréquencemètre temps réel peut pour cela être utilisé afin de détecter, impulsion par impulsion, la fréquence d'émission.

Comme cela a été présenté précédemment, notamment lors de l'examen de la figure 1, un module 5 d'affichage relié à l'unité 4 de mesure et de traitement permet de visualiser en temps réel lors de l'appel ainsi qu'une fois l'appel terminé, sur un dispositif de visualisation, des informations relatives au fonctionnement du terminal de téléphonie mobile et notamment celles concernant les niveaux de puissance émise et de DAS déterminées par le dispositif selon l'invention au cours d'un appel.

Le support de visualisation peut être de manière non limitative l'écran du terminal de téléphonie mobile lui-même, ou bien l'écran d'un dispositif spécifique relié audit terminal, ou bien encore l'écran d'un ordinateur de type ordinateur personnel PC relié au dispositif selon le premier aspect de l'invention.

De manière avantageuse, ledit support de visualisation est adapté pour permettre à l'usager d'un terminal de téléphonie mobile de visualiser, notamment lors d'une communication de parole pendant laquelle ledit terminal est plaqué contre l'oreille de l'usager, les informations relatives aux variations de la puissance émise et du niveau de DAS. De telle manière, l'usager dispose d'une indication directe quant au rayonnement auquel il est exposé tout au long d'un appel.

De manière préférentielle, les éléments affichés sur le support de visualisation et destinés à être visualisés par l'usager sont compréhensibles par le grand public.

Les figures 4a et 4b représentent à titre d'exemple les éléments pouvant être affichés en temps réel, au cours d'un appel. Les figures 5a et 5b représentent quant à elles les éléments pouvant être affichés une fois l'appel terminé.

Les figures 4a et 5a concernent plus spécifiquement des informations relatives à la puissance émise par le terminal de téléphonie mobile alors que les figures 4b et 5b concernent elles plus spécifiquement des informations relatives au niveau du DAS réel lors d'un appel.

L'usager peut ainsi être informé :

- en cours d'appel

  - de la fréquence d'émission (champ 12 sur les figures 4a et 4b) ;
  - du type de transmission en cours (champ 13 sur les figures 4a et 4b) ;
  - de la durée de l'appel en cours (champ 14 sur les figures 4a et 4b) ;
  - de la puissance d'émission instantanée (champ 15a sur la figure 4a) ou du niveau de DAS instantané (champ 15b sur la figure 4b) ;
  - d'une représentation graphique de l'évolution de la puissance instantanée (champ 16a sur la figure 4a) ou du niveau de DAS instantané (champ 16b sur la figure 4b) depuis l'établissement de la communication ;
  - du facteur de réduction r en puissance et en DAS.

- un fois l'appel terminé :

  - du nombre de changement de cellule ayant eu lieu au cours de l'appel (champ 17 sur les figures 5a et 5b) ;
  - de la durée de la phase d'établissement de l'appel, de la durée de la communication et de la durée totale de l'appel (champ 18 sur les figures 5a et 5b) ;
  - de la puissance moyenne, maximale (respectivement du niveau de DAS moyen, maximal) et du taux de remplissage lors de la phase d'établissement de l'appel et lors de la phase de communication (champ 19a - respectivement 19b - sur la figure 5a - respectivement 5b).

Comme cela a déjà été mentionné précédemment, l'invention concerne bien évidemment, selon un second aspect, un procédé de détermination des variations temporelles du rayonnement électromagnétique d'un terminal de téléphonie mobile auquel l'usager dudit terminal est exposé au cours d'un appel. Ledit procédé comporte les étapes consistant à :

- disposer au moins une sonde sur le terminal ;
- analyser, au cours de l'appel, les variations du signal temporel en sortie de ladite sonde ;
- déterminer de cette analyse une ou plusieurs informations relatives au rayonnement effectivement émis par le terminal au cours de l'appel.

De manière similaire à ce qui a déjà été présenté précédemment dans le cadre de l'exposé du dispositif selon le premier aspect de l'invention, le procédé selon le second aspect de l'invention comporte une opération de calcul du facteur r de réduction afin de déterminer la variation de la puissance réellement rayonnée et/ou la variation du niveau de DAS en cours d'appel relativement à $P_{MAX}$ et $DAS_{normatif}$.

Enfin ledit procédé peut comprendre une étape de mise à disposition de l'usager des informations relatives au rayonnement dudit terminal au cours de l'appel, par exemple sur un support de visualisation du type de celui mentionné précédemment.

**Revendications**

1. Dispositif de mesure des variations temporelles du rayonnement électromagnétique d'un terminal (1) de téléphonie mobile auquel un usager dudit terminal (1) est exposé au cours d'un appel, le terminal comportant une antenne et émettant à une puissance d'émission variable au cours de l'appel, **caractérisé en ce qu'**il comporte au moins une sonde (2, 3) couplée à l'antenne, et une unité (4) de mesure et de traitement adaptée pour, au cours dudit appel, acquérir un signal hautes fréquences en sortie de la sonde (2, 3), analyser la puissance en sortie de ladite sonde, et déterminer une ou plusieurs informations relatives au rayonnement effectivement émis par le terminal (1).

2. Dispositif selon la revendication 1, **caractérisé en ce que** l'unité (4) est adaptée pour déterminer, au cours de l'appel, un facteur r de réduction du rayonnement auquel l'usager est exposé, ledit facteur r de réduction étant représentatif de l'écart entre la puissance maximale d'émission, et la puissance réellement émise au cours de l'appel.

3. Dispositif selon la revendication précédente, **caractérisé en ce que** ledit facteur r de réduction prend en compte le rapport de la valeur Pi(t) de la puissance en sortie de sonde et de la valeur maximale $Ps_{max}$ de ladite puissance en sortie de sonde lors de l'établissement de l'appel et la densité d des impulsions au cours desquelles s'opère l'émission, selon $r\ (t)\ =\ \dfrac{P_i(t)}{Ps_{max}} \times d$ .

4. Dispositif selon la revendication précédente, **caractérisé en ce que** ladite unité (4) évalue la puissance d'émission Pe du terminal (1) au cours dudit appel en fonction de la puissance maximale $P_{MAX}$ d'émission du terminal (1) et dudit facteur de réduction r(t), selon
Pe(t) = $P_{MAX} \times$ r(t).

5. Dispositif selon la revendication précédente, **caractérisé en ce que** la puissance maximale $P_{MAX}$ d'émission du terminal (1) de téléphonie mobile est une donnée fournie par le constructeur dudit terminal (1) ou une donnée mesurée en environnement de laboratoire.

6. Dispositif selon l'une des revendications 3 à 5, **caractérisé en ce que** ladite unité (4) est adaptée pour évaluer le DAS (Débit d'Absorption Spécifique) auquel l'usager est soumis au cours de l'appel en fonction du niveau de DAS normatif ($DAS_{normatif}$) dudit terminal (1) et dudit facteur de réduction r(t) selon DAS(t) = $DAS_{normatif} \times$ r(t).

7. Dispositif selon la revendication précédente, **caractérisé en ce que** le DAS normatif $DAS_{normatif}$ du terminal (1) de téléphonie mobile est une donnée fournie par le constructeur dudit terminal (1) ou une donnée mesurée en environnement de laboratoire.

8. Dispositif selon l'une des revendications précédentes, **caractérisé en ce qu'**il comporte en outre un module d'affichage (5) pour permettre à l'usager de visualiser lesdites informations relatives au rayonnement dudit terminal (1) au cours de l'appel.

9. Dispositif selon la revendication précédente, **caractérisé en ce que** les informations relatives au rayonnement du terminal (1) au cours de l'appel sont affichées en temps réel.

10. Dispositif selon l'une des deux revendications précédentes, **caractérisé en ce que** les informations relatives au rayonnement émis par le terminal (1) pendant toute la durée de l'appel sont affichées une fois l'appel terminé.

11. Terminal de téléphonie mobile intégrant le dispositif selon l'une quelconque des revendications précédentes.

12. Procédé de détermination des variations temporelles du rayonnement électromagnétique d'un terminal (1) de téléphonie mobile auquel un usager dudit terminal (1) est exposé au cours d'un appel, le terminal comportant une antenne et émettant à une puissance d'émission variable au cours de l'appel, **caractérisé en ce qu'**il comporte les étapes consistant à :

   - acquérir un signal hautes fréquences en sortie d'une sonde (2, 3) disposée de manière à être couplée à l'antenne ;

- analyser les variations de la puissance en sortie de ladite sonde (2, 3);
- déterminer de cette analyse une ou plusieurs informations relatives au rayonnement effectivement émis par le terminal (1) au cours de l'appel.

**13.** Procédé selon la revendication précédente dans lequel l'appel comprend une phase d'établissement d'appel suivie d'une phase de communication, **caractérisé en ce que** l'étape de détermination (c) comprend l'opération consistant à calculer un facteur de réduction $r(t) = \dfrac{P_i(t)}{Ps_{max}} \times d$ prenant en compte le rapport entre la valeur Pi(t) de la puissance en sortie de sonde à la valeur maximale $Ps_{max}$ de ladite puissance en sortie de sonde lors de la phase d'établissement d'appel et la densité d des impulsions au cours desquelles s'opère l'émission.

**14.** Procédé selon la revendication précédente, **caractérisé en ce que** l'étape de détermination (c) comprend en outre l'opération d'évaluation de la puissance d'émission Pe du terminal (1) au cours dudit appel en fonction de la puissance maximale $P_{MAX}$ d'émission du terminal (1) et dudit facteur de réduction r(t), selon $Pe(t) = P_{MAX} \times r(t)$.

**15.** Procédé selon l'une des revendications 13 ou 14, **caractérisé en ce que** l'étape de détermination (c) comprend en outre l'opération d'évaluation du DAS (Débit d'Absorption Spécifique) auquel l'usager est soumis au cours de l'appel en fonction du niveau de DAS normatif $DAS_{normatif}$ et dudit facteur de réduction r(t), selon $DAS(t) = DAS_{normatif} \times r(t)$.

**16.** Procédé selon l'une des revendications 12 à 15, **caractérisé en ce qu'**il comporte une étape supplémentaire d'affichage à destination de l'usager des informations relatives au rayonnement dudit terminal (1) au cours de l'appel.

**Claims**

**1.** Device for measuring temporal variations in the electromagnetic radiation from a mobile telephony terminal (1) to which a user of the said terminal (1) is exposed during a call, the terminal including an antenna and emitting at a variable emission power during the call, **characterized in that** it includes at least one probe (2, 3) coupled to the antenna, and a measuring and processing unit (4) intended to, during the said call, acquire a high-frequency signal at the output of the probe (2, 3), analyse the power at the output of the said probe, and determine one or more items of information relating to the radiation actually emitted by the terminal (1).

**2.** Device according to Claim 1, **characterized in that** the unit (4) is intended to determine, during the call, a factor r of reduction of the radiation to which the user is exposed, the said reduction factor r being representative of the difference between the maximum emission power and the power actually emitted during the call.

**3.** Device according to the preceding claim, **characterized in that** the said reduction factor r takes into account the ratio of the value Pi(t) of the power at the output of the probe and of the maximum value $Ps_{max}$ of the said power at the output of the probe when the call is being set up and the density d of pulses during which pulses the emission takes place, according to the expression: $r(t) = \dfrac{P_i(t)}{Ps_{max}} \times d$.

**4.** Device according to the preceding claim, **characterized in that** the said unit (4) assesses the emission power Pe from the terminal (1) during the said call as a function of the maximum emission power $P_{MAX}$ from the terminal (1) and of the said reduction factor r(t), according to the expression: $Pe(t) = P_{MAX} \times r(t)$.

**5.** Device according to the preceding claim, **characterized in that** the maximum emission power $P_{MAX}$ from the mobile telephony terminal (1) is an item of data provided by the manufacturer of the said terminal (1) or an item of data measured in a laboratory environment.

**6.** Device according to one of Claims 3 to 5, **characterized in that** the said unit (4) is intended to assess the SAR (Specific Absorption Rate) to which the user is subjected during the call as a function of the standard SAR level ($SAR_{standard}$) of the said terminal (1) and of the said reduction factor r(t), according to the expression: $SAR(t) = SAR_{Standard} \times r(t)$.

7. Device according to the preceding claim, **characterized in that** the standard SAR, SAR$_{standard}$, of the mobile telephony terminal (1) is an item of data provided by the manufacturer of the said terminal (1) or an item of data measured in a laboratory environment.

8. Device according to one of the preceding claims, **characterized in that** it additionally includes a display module (5) to enable the user to view the said information relating to the radiation from the said terminal (1) during the call.

9. Device according to the preceding claim, **characterized in that** the items of information relating to the radiation from the terminal (1) during the call are displayed in real time.

10. Device according to one of the two preceding claims, **characterized in that** the items of information relating to the radiation emitted by the terminal (1) over the entire duration of the call are displayed when the call is terminated.

11. Mobile telephony terminal incorporating the device according to any one of the preceding claims.

12. Method for determining temporal variations in the electromagnetic radiation from a mobile telephony terminal (1) to which a user of the said terminal (1) is exposed during a call, the terminal including an antenna and emitting at a variable emission power during the call, **characterized in that** it includes the following steps consisting in:

   - acquiring a high-frequency signal at the output of a probe (2, 3) arranged so as to be coupled to the antenna;
   - analysing the variations in power at the output of the said probe (2, 3);
   - determining from this analysis one or more items of information relating to the radiation actually emitted by the terminal (1) during the call.

13. Method according to the preceding claim, in which the call includes a call setup phase followed by a communication phase, **characterized in that** the determination step (c) includes the operation consisting in calculating a reduction

factor $r(t) = \dfrac{P_i(t)}{Ps_{max}} \times d$ taking into account the ratio of the value Pi(t) of the power at the output of the probe to the maximum value Ps$_{max}$ of the said power at the output of the probe during the call setup phase and the density d of pulses during which pulses the emission takes place.

14. Method according to the preceding claim, **characterized in that** the determination step (c) additionally includes the operation for assessing the emission power Pe from the terminal (1) during the said call as a function of the maximum emission power P$_{MAX}$ from the terminal (1) and of the said reduction factor r(t), according to the expression: Pe(t) = P$_{MAX}$ $\times$ r(t).

15. Method according to one of Claims 13 or 14, **characterized in that** the determination step (c) additionally includes the operation for assessing the SAR (Specific Absorption Rate) to which the user is subjected during the call as a function of the standard SAR level, SAR$_{standard}$, and of the said reduction factor r(t), according to the expression: SAR (t) = SAR$_{standard}$ $\times$ r (t) .

16. Method according to one of Claims 12 to 15, **characterized in that** it includes a supplementary step for displaying, for the user, items of information relating to the radiation from the said terminal (1) during the call.

**Patentansprüche**

1. Vorrichtung zur Messung der zeitlichen Veränderungen der elektromagnetischen Strahlung eines Mobilfunkendgeräts (1), der ein Benutzer des Endgeräts (1) im Verlauf eines Anrufs ausgesetzt ist, wobei das Endgerät eine Antenne umfaßt und im Verlauf des Anrufs mit einer variablen Sendeleistung sendet, **dadurch gekennzeichnet, daß** sie folgendes umfaßt: wenigstens eine mit der Antenne gekoppelte Sonde (2, 3) und eine Einheit (4) zur Messung und Verarbeitung, die dafür eingerichtet ist, im Verlauf des Anrufs ein von der Sonde (2, 3) ausgehendes Hochfrequenzsignal zu erfassen, die von der Sonde ausgehende Leistung zu analysieren und eine oder mehrere Informationen zu bestimmen, die sich auf die tatsächlich vom Endgerät (1) gesendete Strahlung beziehen.

2. Vorrichtung nach Anspruch 1, **dadurch gekennzeichnet, daß** die Einheit (4) dafür eingerichtet ist, im Verlauf des Anrufs einen Umrechnungsfaktor r für die Strahlung, der der Benutzer ausgesetzt ist, zu bestimmen, wobei der Umrechnungsfaktor r den Unterschied zwischen der maximalen Sendeleistung und der im Verlauf des Anrufs tatsächlich abgestrahlten Leistung beschreibt.

3. Vorrichtung nach dem vorhergehenden Anspruch, **dadurch gekennzeichnet, daß** der Umrechnungsfaktor r folgendes berücksichtigt: das Verhältnis des Werts Pi(t) der Leistung am Sondenausgang und des Maximalwerts $Ps_{max}$ der Leistung am Sondenausgang beim Verbindungsaufbau und die Dichte d der Impulse während derer die Abstrahlung ausgeführt wird, gemäß $r(t) = \dfrac{P_i(t)}{Ps_{max}} \times d$.

4. Vorrichtung nach dem vorhergehenden Anspruch, **dadurch gekennzeichnet, daß** die Einheit (4) die Sendeleistung Pe des Endgeräts (1) im Verlauf des Anrufs als Funktion der maximalen Sendeleistung $P_{MAX}$ des Endgeräts (1) und des Umrechnungsfaktors r(t) gemäß Pe(t) = $P_{MAX} \times$ r(t) berechnet.

5. Vorrichtung nach dem vorhergehenden Anspruch, **dadurch gekennzeichnet, daß** die maximale Sendeleistung $P_{MAX}$ des Mobilfunkendgeräts (1) ein Parameter ist, der vom Hersteller des Endgeräts (1) gelieferter wird, oder ein Parameter, der in einer Laborumgebung gemessen wird.

6. Vorrichtung nach einem der Ansprüche 3 bis 5, **dadurch gekennzeichnet, daß** die Einheit (4) dafür eingerichtet ist, die SAR (Spezifische Absorptionsrate), der der Benutzer im Verlauf des Anrufs ausgesetzt ist, als Funktion der Höhe der Norm-SAR ($SAR_{norm}$) des Endgeräts (1) und des Umrechnungsfaktors r(t) gemäß SAR(t) = $SAR_{norm} \times$ r(t) zu berechnen.

7. Vorrichtung nach dem vorhergehenden Anspruch, **dadurch gekennzeichnet, daß** die Norm-SAR $SAR_{norm}$ des Mobilfunkendgeräts (1) ein Parameter ist, der vom Hersteller des Endgeräts (1) gelieferter wird, oder ein Parameter, der in einer Laborumgebung gemessen wird.

8. Vorrichtung nach einem der vorhergehenden Ansprüche, **dadurch gekennzeichnet, daß** sie außerdem ein Anzeigemodul (5) umfaßt, um es dem Benutzer zu ermöglichen, die Informationen, die sich auf die Strahlung des Endgeräts (1) im Verlauf des Anrufs beziehen, sichtbar zu machen.

9. Vorrichtung nach dem vorhergehenden Anspruch, **dadurch gekennzeichnet, daß** die Informationen, die sich auf die Strahlung des Endgeräts (1) im Verlauf des Anrufs beziehen, in Echtzeit angezeigt werden.

10. Vorrichtung nach einem der beiden vorhergehenden Ansprüche, **dadurch gekennzeichnet, daß** die Informationen, die sich auf die vom Endgerät (1) während der gesamten Dauer des Anrufs ausgesandte Strahlung beziehen, angezeigt werden nachdem der Anruf beendet ist.

11. Mobilfunkendgerät, das die Vorrichtung nach einem der vorhergehenden Ansprüche integriert.

12. Verfahren zum Bestimmen der zeitlichen Veränderungen der elektromagnetischen Strahlung eines Mobilfunkendgeräts (1), der ein Benutzer des Endgeräts (1) im Verlauf eines Anrufs ausgesetzt ist, wobei das Endgerät eine Antenne umfaßt und im Verlauf des Anrufs mit einer variablen Sendeleistung sendet, **dadurch gekennzeichnet, daß** es die Schritte umfaßt, die aus folgendem bestehen:

- Erfassen eines Hochfrequenzsignals, das von einer Sonde (2, 3) ausgeht, die so angeordnet ist, daß sie mit der Antenne gekoppelt ist;
- Analysieren der Veränderungen der Leistung am Ausgang der Sonde (2, 3);
- Bestimmen aufgrund dieser Analyse von einer oder mehreren Informationen, die sich auf die tatsächlich vom Endgerät (1) im Verlauf des Anrufs emittierte Strahlung beziehen.

13. Verfahren nach dem vorhergehenden Anspruch, bei dem der Anruf eine Phase des Verbindungsaufbaus gefolgt von einer Kommunikationsphase umfaßt, **dadurch gekennzeichnet, daß** der Bestimmungsschritt (c) den Vorgang umfaßt, der darin besteht, einen Umrechnungsfaktor $r(t) = \dfrac{P_i(t)}{Ps_{max}} \times d$ zu berechnen, wobei folgendes berücksichtigt wird: das Verhältnis zwischen dem Werts Pi(t) der Leistung am Sondenausgang und dem Maximalwert $Ps_{max}$ der Leistung am Sondenausgang bei der Verbindungsaufbauphase und die Dichte d der Impulse während derer die Abstrahlung ausgeführt wird.

14. Verfahren nach dem vorhergehenden Anspruch, **dadurch gekennzeichnet, daß** der Bestimmungsschritt (c) außerdem den Vorgang der Berechnung der Sendeleistung Pe des Endgeräts (1) im Verlauf des Anrufs als Funktion der maximalen Sendeleistung $P_{MAX}$ des Endgeräts (1) und des Umrechnungsfaktors r(t) gemäß Pe(t) = $P_{MAX}$ × r (t) umfaßt.

15. Verfahren nach einem der Ansprüche 13 oder 14, **dadurch gekennzeichnet, daß** der Bestimmungsschritt (c) außerdem den Vorgang der Berechnung der SAR (Spezifische Absorptionsrate), der der Benutzer im Verlauf des Anrufs ausgesetzt ist, als Funktion der Höhe der Norm-SAR $SAR_{norm}$ und des Umrechnungsfaktors r(t) gemäß SAR (t) = $SAR_{norm}$ × r(t) umfaßt.

16. Verfahren nach einem der Ansprüche 12 bis 15, **dadurch gekennzeichnet, daß** es einen zusätzlichen Schritt zur Anzeige für den Benutzer von Informationen umfaßt, die sich auf die Strahlung des Endgeräts (1) im Verlauf des Anrufs beziehen.

<u>FIG.1</u>

FIG.2

FIG.3a

FIG.3b

15a

Type de transmission :
voix — 13

Fréquence d'émission
**1800MhZ**

Puissance
instantanée:
**0,9%**

Durée actuelle de
l'appel
**5min05** — 14

12

Puissance d'émission
(% de Pmax)

100%
10%
1%
0

t

16a

## FIG.4a

15b

Type de transmission :
voix — 13

Fréquence d'émission
**1800MhZ**

DAS instantané:
**0.01W/kg**
*(P = 1%)*

Durée actuelle
de l'appel
**5min05** — 14

12

**DAS**

W/Kg  1 —  *100%*
0.1 —  *10%*
0.01 —  *1%*
0.001 —  *0*

t

16b

## FIG.4b

| Type de transmission : **voix** | | |
|---|---|---|
| Fréquence d'émission<br><br>**1800MhZ**<br><br><br>changement de cellule:<br>**2** | Phase d'établissement<br>Puissance moyenne: **0,5%**<br>Puissance maximale: **1%**<br>Taux de remplissage: **15%**<br>Phase de communication<br>Puissance moyenne: **0,5%**<br>Puissance maximale: **1%**<br>Taux de remplissage: **15%** | Durée totale<br>de l'appel<br><br>**8min**<br><br>établissement: **1mn**<br>communication:**7mn** |

17          19a  18

## FIG.5a

| Type de transmission : **voix** | | |
|---|---|---|
| Fréquence d'émission<br><br>**1800MhZ**<br><br><br>changement de cellule:<br>**2** | Phase d'établissement<br>DAS moyen: **0,1** *(10%)*<br>DAS maximal: **1** *(100%)*<br>Taux de remplissage: **15%**<br>Phase de communication<br>DAS moyen: **0,01** *(1%)*<br>DAS maximal: **0,1** *(10%)*<br>Taux de remplissage: **10%** | Durée totale<br>de l'appel<br><br>**8min**<br><br>établissement: **1mn**<br>communication:**7mn** |

17          19b  18

## FIG.5b